# EUROPÄISCHE PATENTSCHRIFT

(11) **EP 2 774 736 B1**
(45) Veröffentlichungstag und Bekanntmachung des Hinweises auf die Patenterteilung: **24.08.2022**
(21) Anmeldenummer: 14157505.0
(22) Anmeldetag: 03.03.2014
(51) Int. Cl.: B28B 3/00, B28B 7/00, B28B 13/02

(54) **Pressenanordnung und Verfahren zum Pressen eines Pressteils**
Press assembly and method for pressing a pressed part
Agencement de presse et procédé de pressage d'une pièce pressée

(30) Priorität: 08.03.2013 DE 102013004047
(43) Veröffentlichungstag der Anmeldung: 10.09.2014
(73) Patentinhaber: Dorst Technologies GmbH & Co. KG, 82431 Kochel am See (DE)
(72) Erfinder: Härtl, Günter Helmut, 95652 Waldsassen (DE)
(74) Vertreter: Pfrang, Tilman

(56) Entgegenhaltungen:
- EP-A1- 0 255 719
- EP-A1- 1 380 398
- WO-A1-03/028967
- DE-A1- 3 238 389
- DE-A1- 3 304 576
- FR-A1- 2 404 609
- JP-A- S63 303 698

## Beschreibung

Die Erfindung bezieht sich auf eine Pressenanordnung - insbesondere Behälterpressenanordnung - zum Pressen eines Pressteils, insbesondere eines einen Henkel aufweisenden Behälters aus einem pulver- und/oder granulatförmigen keramischen Pressgut, und auf ein Verfahren zum Pressen eines solchen Pressteils aus einem pulver- und/oder granulatförmigen keramischen Pressgut.

Derartige Verfahren und Pressenwerkzeuge zum isostatischen Pressen eines pulver- und/oder granulatförmigen keramischen Pressguts weisen üblicherweise ein Presswerkzeug mit zwei Pressformkomponenten auf. Im zusammengesetzten Zustand bilden die beiden Pressformkomponenten zwischen sich einen Formraum aus. Auf den Seiten, die dem Formraum zugewandt sind, weisen die Pressformkomponenten jeweils eine Membran auf, welche unterseitig mit einem Pressdruck beaufschlagbar ist. In den Formraum eingefülltes Pressgut wird durch die Membranen bzw. den unterseitig auf diese einwirkenden Pressdruck zu einem Press- bzw. Formteil zusammengepresst.

Problematisch ist das Pressen von Bechern, Tassen oder Schüsseln mit steilwandigen Becherwänden. DE 40 32 316 C1 beschreibt ein Verfahren und eine Vorrichtung zum Herstellen keramischer Hohlkörper mit seitlichem Ansatz als Henkel einer Henkeltasse. In einem ersten Arbeitsgang wird mit zwei Pressformkomponenten in deren Formraum ein becherförmiger Hohlkörper gepresst. Anschließend wird der so gepresste becherförmige Hohlkörper zwischen zwei Stützformen eingesetzt, welche einen seitlichen Wandungsabschnitt des becherförmigen Hohlkörpers freilassen. Dort wird eine zu dieser Seite offene weitere Pressformkomponente angesetzt. Diese weitere Pressformkomponente weist einen Formraum zum Pressen eines Henkels aus einem keramischen Granulat auf, wobei die beiden offenen Henkelansatzbereiche an der seitlichen Umfangswandung des benachbart angeordneten Hohlkörpers anliegen. Beim isostatischen Pressen des Henkels entsteht ein Druck auf dessen Henkelansatzabschnitte, so dass sich der Henkel mit dem becherförmigen Hohlkörper fest verbindet. Es handelt sich somit um eine konstruktiv und verfahrenstechnisch aufwendige Pressanordnung mit zwei eigenständigen Pressstationen zum isostatischen Pressen und mit zusätzlichen Stützkörpern, wobei ein Umsetzen des im nicht-gesinterten Zustand empfindlichen Hohlkörpers erforderlich ist.

DE 10 2011 103 745 A1 beschreibt ein Verfahren und ein Presswerkzeug zum isostatischen Pressen steilwandiger Gegenstände aus keramischem Granulat. Das Presswerkzeug ist mit einem mechanischen Ausstoßer versehen, so dass ein gepresster Gegenstand wenigstens teilweise aus einer Kontur eines Oberstempels des Presswerkzeugs herausgeschoben werden kann.

Zum Pressen hintergriffiger Gegenstände, beispielsweise Bechern oder Hohlwaren, beschreibt DE 10 2009 048 882 B4 eine Vorrichtung und ein Verfahren, bei denen eine oberseitige Pressformkomponente einen relativ dazu verstellbaren Stempel aufweist. Dies ermöglicht in einem ersten Arbeitsschritt beim Schließen der beiden Pressformkomponenten nur die oberseitige Membran einzuführen, um nachfolgend den Stempel in diese einzuführen. Durch das Einführen des Stempels wird die Membran quer zur Stempelbewegung seitlich aufgeweitet. Die Membran hat eine breite Wandungsstärke und ist zum Pressen eines hintergriffigen Bechers aufweitbar, wobei die Membran zusammen mit dem Stempel durch eine Formöffnung hindurch nicht in den hintergriffig zu pressenden Raum einführbar wäre. Damit gepresste stärker hintergriffige Pressteile würden sich aus einer Formöffnung der unteren Form jedoch nicht entformen lassen.

DE 43 26 033 C1 betrifft ein Presswerkzeug zum Pressen steilwandiger Hohlkörper.

JP S 63303698 A offenbart eine Pressenanordnung gemäß dem Oberbegriff des Anspruchs 1. Sie offenbart insbesondere eine erste Pressformkomponente, die eine rückseitig mit Druck als Pressdruck beaufschlagbare Membran aus Neoprenkautschuk aufweist und eine flexible Außenform, bestehend aus einem Behälter und einem Deckel, die in der ersten Pressformkomponente einsetzbar oder eingesetzt ist.

Die Aufgabe der Erfindung besteht darin, eine Pressenanordnung und ein Pressverfahren zum Pressen eines Pressteils, insbesondere eines insbesondere bauchigen Behälters mit Henkel mit möglichst wenig technischem Aufwand bereitzustellen. Insbesondere soll ein getrenntes Anfertigen von Becherteil und Henkelabschnitt in jeweils eigenen Presszyklen vermieden werden und/oder ein hinterschnittiges Pressteil mit nur einem Pressvorgang fertigbar sein.

Diese Aufgabe wird durch eine Pressenanordnung - insbesondere Behälterpressenanordnung - zum Pressen eines Pressteils aus einem pulver- und/oder granulatförmigen keramischen Pressgut mit den Merkmalen des Patentanspruchs 1, durch ein Verfahren zum Pressen eines Pressteils aus einem pulver- und/oder granulatförmigen keramischen Pressgut mit den Merkmalen des Patentanspruchs 9.

Vorteilhafte Ausgestaltungen sind Gegenstand von abhängigen Ansprüchen.

Die Pressenanordnung weist eine erste Pressformkomponente auf, die eine rückseitig mit Pressdruck beaufschlagbare Membran aufweist, weist eine zumindest abschnittsweise elastische Außenform auf, die in der ersten Pressformkomponente einsetzbar oder eingesetzt ist, und weist eine zweite Pressformkomponente auf, die als ein Gegenelement zum Ausbilden eines Formraums zwischen einerseits sich oder einer an der zweiten Pressformkomponente angeordneten Innenform und andererseits einem innenseitigen Formabschnitt der Außenform anordbar ist.

Gemäß einer Ausgestaltung ist das Pressteil ein hintergriffiges keramisches Gut. Die Komponenten der Pressenanordnung sind somit zum Formen eines solchen Pressteils konturiert oder konturierbar. Hintergriffig wird dabei insbesondere aus Sicht einer Öffnung der Form bzw. des Formraums gesehen oder aus Sicht einer Aufnahmeöffnung eines so gepressten Pressteils. Unter hintergriffig wird insbesondere verstanden, dass nach dem Pressen in einer Form das Pressteil eine abschnittsweise breitere Geometrie bzw. Kontur hat, wobei ein Abschnitt mit der breiteren Kontur durch eine Öffnung der Form aus der geschlossenen Form nicht entformbar ist. Das so formbare Pressteil ist z.B. eine bauchige Suppentasse, eine Schüssel, ein Topf oder ein Becher. Im Fall technischer Keramik kann es sich z.B. um einen Isolator handeln.

Gemäß einer weiteren besonders bevorzugten Ausgestaltung ist das Pressteil ein Behälter bzw. Hohlkörper, wobei der Behälter zumindest einen seitlichen Ansatz - insbesondere Henkel - aufweist und wobei die Außenform zumindest einen vom Becherformabschnitt als Formabschnitt in die Außenform führenden Formraum zum Ausbilden des zumindest einen seitlichen Ansatzes aufweist. Die Außenform weist somit insbesondere zumindest einen vom Becherformabschnitt in diese hineinführenden Formraum zum Ausbilden des zumindest einen Henkels auf.

Insbesondere wird dabei der Formraum zwischen einerseits der zweiten Pressformkomponente und/oder einer an der zweiten Pressformkomponente angeordneten Innenform und andererseits einem Abschnitt, insbesondere innenseitigen Becherformabschnitt der Außenform ausgebildet.

Eine solche Pressenanordnung ermöglicht ein Pressen eines Bechers mit einem daran ansitzenden Henkel in einem einzigen Presszyklus. Ein separates Herstellen und nachträgliches Befestigen eines Henkels an dem Becher oder ein Anformen eines Henkels in einem separaten zweiten Pressvorgang entfällt.

Unter einem Becher mit einem seitlichen Ansatz bzw. Henkel sind insbesondere auch becherartige Gegenstände wie z.B. Tassen oder Schüsseln zu verstehen, welche einen schüssel- bzw. becherartigen Abschnitt mit daran einem Henkel oder mehreren Henkeln aufweisen. Ein Henkel kann dabei mit seinem oberen und unteren Ende in den Becherformabschnitt übergehen. Ein Henkel kann aber auch mit z.B. nur seinem oberen Ende in den Becherabschnitt übergehen.

Ein Henkel kann nicht nur einen hakenförmigen oder gebogenen Verlauf aufweisen, sondern in einfachster Form auch als nur ein insbesondere geradlinig abstehendes Element als seitlichem Ansatz geformt sein. Zu einem Henkel äquivalent ist insbesondere ein Ausgießer an z.B. einem Becherrand zum Unterstützen eines Ausgießens einer Flüssigkeit aus dem Becher.

Insbesondere ist die Außenform vorteilhaft einteilig mit sowohl dem Formabschnitt bzw. Becherformabschnitt als auch dem Ansatz- bzw. Henkelformabschnitt ausgebildet, so dass ein gleichzeitiges, gemeinsames Pressen von Becher und Henkel aus einem Pulver und/oder Granulat in einem Arbeitsgang erfolgt. Sowohl der Becherformabschnitt als auch der Henkelformabschnitt befinden sich somit bevorzugt in einer einzigen Außenform. Die Außenform ist innenseitig zum Formen der gewünschten Außenseite des Hohlkörpers bzw. Bechers geformt und hat einen seitlichen Wand- bzw. Körperbereich, in welchen der Henkelformabschnitt hineinführt.

Eine Ausgestaltung besteht darin, dass die Außenform im eingesetzten Zustand zumindest teilweise an der Membran anliegt, insbesondere ein/der Hohlkörper-Formabschnitt, insbesondere Becherformabschnitt und eine ansatz- oder henkelseitige Außenwand der Außenform außenseitig jeweils zumindest teilweise an der Membran anliegen. Ein auf rückseitig auf die Membran einwirkender Pressdruck wird dadurch auf die Außenform übertragen und über die Wandung der Außenform weiter auf den innerhalb dieser liegenden Formraum übertragen, in dem sich das zu pressende Pressgut befindet. Insbesondere liegt eine Außenwand des Becherformabschnitts an der Membran der ersten Pressformkomponente an und wird beim Pressen durch diese in Richtung des Formraums gepresst.

Eine weitere Ausgestaltung besteht darin, dass die Pressenanordnung - insbesondere deren zweite Pressenformkomponente - eine Druckleitung aufweist, die zum Anlegen eines Unterdrucks zu einem Aufnahmespalt zwischen der Membran und der darin eingesetzten Außenform führt. Während der Unterdruck anliegt, wird die Außenform in der Membran bzw. in der ersten Pressformkomponente angesaugt bzw. fest gehalten, dies bevorzugt sogar dann, wenn auf die Membran unterseitig gleichzeitig der Pressdruck einwirkt. Der Unterdruck verhindert vorteilhaft auch ein Herausziehen der Außenform aus der Membran oder ein Abheben davon, wenn an dem Formraum z.B. während des Befüllens mit dem Pressgut ein Unterdruck anliegt.

Auch ist es eine Ausgestaltung, dass die Pressenanordnung eine Druckleitung aufweist, die zum Anlegen eines Drucks, insbesondere Unterdrucks zu einer Entlüftungsöffnung zu dem Formraum führt, wobei der Unterdruck unabhängig von dem Unterdruck zwischen Membran und Außenform anlegbar ist. Dieser Unterdruck dient insbesondere dazu, während des Befüllens des Formraums mit dem Pressgut und während des Pressens des Pressguts eine Entlüftung des Formraums zu unterstützen. Dies erfolgt insbesondere über eine eigene Druckleitung unabhängig von einem Unterdruck zum zeitweiligen Fixieren der Außenform in der ersten Pressformkomponente.

Noch eine Ausgestaltung besteht in einer derartigen Pressenanordnung mit einer Druckleitung zum Anlegen eines innenseitigen insbesondere zweiten Pressdrucks an den zumindest einen Formraum, wobei der innenseitige Pressdruck über eine Membran einwirkt, welche an der zweiten Pressformkomponente und/oder an der Innenform ausgebildet ist. Dadurch kann Pressdruck von beiden Seiten auf den Formraum einwirken. Bei einer unterschiedlichen Steuerbarkeit des außen und des innen am Formraum anliegenden Pressdrucks kann bevorzugt zuerst ein innenseitiger Pressdruck und erst zeitversetzt dazu ein außenseitiger Pressdruck an den Formraum angelegt werden. Prinzipiell können sowohl hinsichtlich zeitlichem Verlauf als auch hinsichtlich Druckverlauf beliebige Druckabfolgen für den außenseitigen Pressdruck relativ zum innenseitigen Pressdruck eingerichtet werden. Insbesondere sind individuell geeignete Einstellungen für unterschiedliche zu pressende Formteile umsetzbar. Berücksichtigbar sind dabei auch ggfs. auftretende zeitliche Abweichungen des verwendeten Pressguts. Eine solche Steuerung kann über eine Steuereinrichtung erfolgen, welche auch für sonstige Komponentenbewegungs- und/oder Pressabläufe an der Pressenanordnung angeschlossen oder darin integriert ist. Auch kann eine Bewegungsstrecke über nur die äußere Membran reduziert werden, wenn auch innenseitig ein Pressdruck auf das Pressgut einwirkt.

Eine weitere Ausgestaltung besteht in einer derartigen Pressenanordnung mit einer Entformungseinrichtung, die zum seitlichen Aufbiegen der Außenform im Bereich eines in die Außenform hineinführenden Schlitzes ausgestaltet und eingerichtet oder ansteuerbar ist. Dies ermöglicht eine seitliche Entspannung des gepressten Press- bzw. Formteils und zugleich eine Lösung des Pressteils von der Innenform. Insbesondere dann, wenn der Schlitz durch den zumindest einen Henkel führt, wird eine unerwünschte Spannung im Bereich des Henkelansatzes zwischen Henkel und Becherwand verringert oder ganz vermieden.

Vorteilhaft können zum Beispiel in einem oberen außenseitig gerichtet verlaufenden Randbereich eine Struktur, z.B. eine Ausnehmung oder Durchtrittsöffnung ausgebildet sein, in welche z.B. Stifte in der Entformungseinrichtung eingesetzt und dann in seitlicher Richtung bewegt werden.

Außerdem wird ein erfindungsgemäßes Verfahren zum Pressen eines Pressteils aus einem pulver- und/oder granulatförmigen keramischen Pressgut offenbart, wobei eine zumindest abschnittsweise elastische Außenform in einer unterseitig mit Pressdruck beaufschlagbaren Membran einer ersten Pressformkomponente eingesetzt wird, wobei einerseits eine zweite Pressformkomponente und/oder eine Innenform und andererseits die erste Pressformkomponente mit der Außenform aneinandergesetzt werden, wobei dazwischen ein insbesondere becherbildender Formraum ausgebildet ist oder wird, wobei der zumindest eine Formraum mit dem Pressgut gefüllt wird und wobei das Pressgut durch Anlegen zumindest eines isostatischen Pressdrucks zu dem Pressteil gepresst wird.

Gemäß einer Ausgestaltung wird als das Pressteil ein hintergriffiges keramisches Gut gepresst. Einer weitere Ausgestaltung besteht darin, dass die Außenform mit zumindest einem von einem Becherformabschnitt in eine Wandung der Außenform zumindest teilweise hineinführenden Formraum zum Ausbilden zumindest eines seitlichen Ansatzes - insbesondere Henkels - verwendet wird und wobei als das Pressteil ein Behälter zusammen mit dem zumindest einen seitlichen Ansatz gepresst wird.

Insbesondere erstreckt sich auch hier der Formraum für den seitlichen Ansatz bzw. Henkel ausgehend von dem Formraum für den Becher in das Material der Außenform hinein.

Es ist eine Ausgestaltung, dass ein gepresstes Pressteil, insbesondere ein gepresster Behälter zusammen mit der geschlossenen gehaltenen Außenform aus der ersten Pressformkomponente entnommen wird. Dadurch wird eine zu starke und unkontrollierte Druckentlastung des Behälters gegenüber einer direkten Entnahme des Pressteils, insbesondere Hohlkörpers bzw. Behälters aus der noch in der Pressformkomponente eingesetzten Außenform vermieden.

Eine Ausgestaltung besteht darin, dass während des Entnehmens aus der ersten Pressformkomponente die/eine Innenform noch im Formteil, insbesondere Behälter eingesetzt bleibt. Insbesondere kann gemäß einer Weiterbildung die Innenform im Behälter eingesetzt bleiben, bis die Außenform geöffnet wurde, um einen innenseitigen Druck auf die Behälterwand zu erhalten. Optional kann während des Entnehmens der Außenform aus der Pressenanordnung ein innenseitiger Druck - z.B. Über- oder Unterdruck - an der Innenform anliegen.

Auch ist es eine Ausgestaltung, dass zum Entnehmen des gepressten Pressteils, insbesondere Behälters die Außenform erst durch Aufweiten eines Schlitzes geöffnet wird und nachfolgend das Pressteil aus der Außenform entnommen wird. Dadurch erfolgt zuerst eine seitliche Druckentlastung des Becherabschnitts des Pressteils bzw. Behälters. Das nachfolgende Entnehmen des Pressteils kann insbesondere nach oben aus der Außenform heraus erfolgen. Je kürzer der Schlitz ist, desto kürzer ist auch eine Pressnaht an einem später gepressten Pressteil, so dass nur ein kürzerer Nahtabschnitt zu verputzen ist - sofern es nicht belassen wird.

Eine weitere Ausgestaltung besteht darin, dass zumindest während eines Teils eines Presszyklus ein an der Membran oder der Außenform anliegender Pressdruck zumindest zeitweilig mit unterschiedlichem Druck zu einem an einer Innenform anliegenden Pressdruck an den zumindest einen Formraum angelegt wird. Vorteilhaft bewirkt dies, dass eine Rissbildung am Henkelansatz vermieden wird. Außerdem kann eine gleichmäßigere Verdichtung bzw. Dichteverteilung erzielt werden.

Noch eine Ausgestaltung ist, dass an einem Aufnahmespalt zwischen der Membran der Pressformkomponente - insbesondere der ersten Pressformkomponente - und der darin eingesetzten Außenform ein Unterdruck angelegt wird, wobei der Unterdruck insbesondere über eine längere Zeitdauer angelegt wird als ein Druck, insbesondere Unterdruck, der an einer Entlüftungsöffnung des Formraums angelegt wird. Dadurch kann der Unterdruck zum Entlüften des Formraums abgeschaltet werden, um die oberen Formteile abzuheben, während der Unterdruck zum Festhalten der Außenform in der ersten Pressformkomponente während des Abhebens insbesondere der zweiten Pressformkomponente weiter anliegt.

Außerdem bevorzugt wird eine Außenform - insbesondere eine Außenform einer solchen Pressenanordnung bzw. eines solchen Verfahrens - mit hinterschnittfreier Außenkontur und mit einem innenseitigen Formabschnitt zum Ausbilden eines Pressteils mit hinterschnittiger Innenkontur. Die hinterschnittfreie Außenkontur ermöglicht ein Einsetzen in einer erste Pressenkomponente mit einer druckbeaufschlagbaren Membran und eine Entnahme daraus. Trotzdem wird das Pressen eines hinterschnittigen Pressteils in der Außenform ermöglicht, da diese die hinterschnittiger Innenkontur hat. Das zumindest abschnittsweise elastische Material der Außenform überträgt dabei einen von der Membran der Pressenkomponente außenseitig anliegenden Pressdruck auf deren innenseitige Formwand.

Außerdem bevorzugt wird eine Außenform, insbesondere eine derartig einsetzbare Außenform einer solchen Pressenanordnung bzw. eines solchen Verfahrens, wobei die Außenform zum Ausbilden eines Pressteils ausgebildet ist, wobei das Pressteil einen zumindest einen seitlichen Ansatz aufweisenden Behälter ausbildet bzw. formt und wobei die Außenform zumindest abschnittsweise aus einem elastischen Material ausgebildet ist und einen innenseitigen Formabschnitt - insbesondere Becherformabschnitt - und zumindest einen davon ausgehenden Formraum zum Ausbilden des seitlichen Ansatzes - insbesondere Henkels - aufweist.

Insbesondere hat eine solche Außenform einen innenseitigen Becherformabschnitt und zumindest einen davon ausgehenden Formraum zum Ausbilden eines Henkels aufweist und wobei zumindest Teile des Becherformabschnitts und des Formraums zum Ausbilden eines zumindest einen Henkel aufweisenden Behälters aus einem elastischen Material ausgebildet sind. Insbesondere ist die gesamte Außenform aus einem elastischen Material ausgebildet. Von außen auf die Außenform einwirkender Pressdruck wirkt dadurch über das Material der Außenform auf deren innenseitigen Abschnitte zur Ausbildung einer Becherwand und eines Henkels an der Becherwand.

Es ist eine Ausgestaltung, dass die Außenform einen Schlitz aufweist, wobei der Schlitz sich durch zumindest einen Teil eines Formabschnitts, insbesondere eines Bodenabschnitts erstreckt. Vorteilhaft ist ggfs. auch, wenn der Schlitz sich durch zumindest einen Teil eines Bodenabschnitts und in einer Ebene schräg, insbesondere quer zum Bodenabschnitt durch einen Hohlkörper- oder Becherformabschnitt erstreckt. Dies ermöglicht ein seitliches Aufbiegen der Außenform zur Entspannung und zur Entnahme des gepressten Guts. Der Schlitzverlauf quer zum Boden bewirkt, dass eine Entspannung des Behälters parallel zu seiner Mittenachse erfolgt, was insbesondere bei nicht zylindrisch geformten Pressteilen bzw. Behältern eine gleichmäßige Spannungsreduzierung in der Behälterwand bewirkt.

Eine Ausgestaltung davon ist, dass sich der Schlitz auch durch zumindest einen Henkelformabschnitt erstreckt. Dadurch entsteht eine Pressnaht im Bereich des Henkels anstelle im Bereich der Wandung des Bechers. Sofern Nahtreste nach einem Putzvorgang verbleiben sollten, stören diese dort nicht so sehr das Aussehen wie im Becherwandbereich. Außerdem ist ein Putzen im Bereich des stabilen Henkels einfacher als an der im Vergleich dazu dünnwandigen und empfindlicheren Becherwand.

Auch kann es eine Ausgestaltung sein, dass im Becherformabschnitt ein Henkeleinsatz oder ein sonstiger Einsatz aus einem insbesondere starren Material eingesetzt ist oder einsetzbar ist. Ein Henkeleinsatz kann zweiseitig vom Formraum zum Ausbilden eines Henkels umgeben sein. Die Verwendung eines starren Materials bewirkt eine besonders vorteilhafte Druckwirkung auf das Pressgut, das sich in dem Formraum zum Pressen des Henkels befindet, da ein durch den Henkeleinsatz konstanter Gegendruck aufgebaut wird. Der Einsatz kann aber auch durch eine entsprechende Strukturierung der Außenform selber einteilig mit der Außenform und aus einem elastischen Material ausgebildet sein.

Eine Ausgestaltung einer solchen Innenform besteht darin, dass die Innenform eine elastische Umfangswand - insbesondere eine elastische Membran als Umfangswand- aufweist.

Davon eine Ausgestaltung ist, dass die Innenform an einer Druckleitung der zweiten Pressformkomponente anschließbar ist zum innenseitigen Anlegen eines Pressdrucks in der Innenform.

Außerdem bevorzugt wird eine Vorrichtung zur Herstellung einer Außenform aus einem zumindest abschnittsweise elastischen Material - insbesondere einer derartigen Außenform, wobei die Vorrichtung zur Herstellung der Außenform aufweist mindestens zwei Seitenteile und mindestens ein Kernteil als Formteile, welche im zusammengesetzten Zustand zwischen sich einen Formraum zum Gießen der Außenform ausbilden, und ein insbesondere flächiges Schlitzformteil, welches teilweise - insbesondere nur teilweise - hineinragend zwischen die Seitenteile und das mindestens eine Kernteil einsetzbar oder eingesetzt ist. Insbesondere ragt das Schlitzformteil somit nicht nur zwischen die beiden Seitenteile, welche eine außenseitige Becherformwand ausbilden, sondern auch in das Kernteil hinein, welches eine innenseitige Becherformwand ausbildet. Das Schlitzformteil bzw. in einer gefertigten Außenform der Schlitz kann sich somit nur über einen kurzen Teil einer Formwand, insbesondere Becherformwand erstrecken, kann sich ganz durch diese hindurch bis zu einem Boden, in den Boden teilweise hinein oder ganz durch den Boden hindurch erstrecken. Insbesondere hat der Schlitz bzw. das diesen erzeugende Schlitzformteil eine Breite von weniger als einem Millimeter, insbesondere eine Breite in einem Breitenbereich von 0,1 - 0,5 mm, insbesondere in einem Breitenbereich von 0,2 - 0,4 mm.

Außerdem bevorzugt wird ein Verfahren zur Herstellung einer derartigen Außenform, bei dem mindestens zwei Seitenteile und mindestens ein Kernteil als Formteile zusammengesetzt werden, wobei diese im zusammengesetzten Zustand zwischen sich einen Formraum zum Gießen der Außenform ausbilden, wobei ein insbesondere flächiges Schlitzformteil teilweise - insbesondere nur teilweise - hineinragend zwischen die Seitenteile und das mindestens eine Kernteil eingesetzt wird und wobei nachfolgend die Außenform mit einem in diese hineinragenden Schlitz im Formraum zumindest abschnittsweise aus einem elastisch bleibenden Material gegossen wird.

Ein Ausführungsbeispiel wird nachfolgend anhand der Zeichnung näher erläutert. In den verschiedenen Figuren verweisen gleiche Bezugszeichen auf jeweils gleich aufgebaute oder gleich wirkenden Komponenten und Verfahrensschritte, weshalb die Ausführungen zu einer Figur diesbezüglich insbesondere auch für die übrigen Figuren gelten. Es zeigen:
- Fig. 1: eine seitlich Querschnittsansicht durch eine Pressenanordnung, insbesondere Behälter-Pressenanordnung;
- Fig. 2: eine seitliche Schnittansicht durch eine Außenform, welche in einer Pressenanordnung gemäß Fig. 1 einsetzbar ist;
- Fig. 3: eine seitliche Ansicht einer Innenform, welche in einer derartigen Pressenanordnung einsetzbar ist;
- Fig. 4A: die Pressenanordnung gemäß Fig. 1 mit einem darin gepressten Becher bei einem Entformungsschritt;
- Fig. 4B: die Anordnung gemäß Fig. 4A in einem nachfolgenden Entformungsschritt;
- Fig. 4C: eine bei dem Entformungsschritt gemäß Fig. 4B entnommene Anordnung aus Außenform, gepresstem Behälter und Innenform in einer um relativ zu Fig. 4B um 90° verdrehten Seitenansicht;
- Fig. 4D: einen 4C nachfolgenden Entformungsschritt zum Entformen und Entnehmen des gepressten Behälters;
- Fig. 5A: einen gegenüber Fig. 4A modifizierten Entformungsschritt;
- Fig. 5B: einen gegenüber 4B modifizierten Entformungsschritt;
- Fig. 6A: eine Außenform-Herstellungsform in Draufsicht von oben; und
- Fig. 6B: eine seitliche Ansicht auf einzelne Komponenten gemäß Fig. 6A in teilweise geschnittener Ansicht.

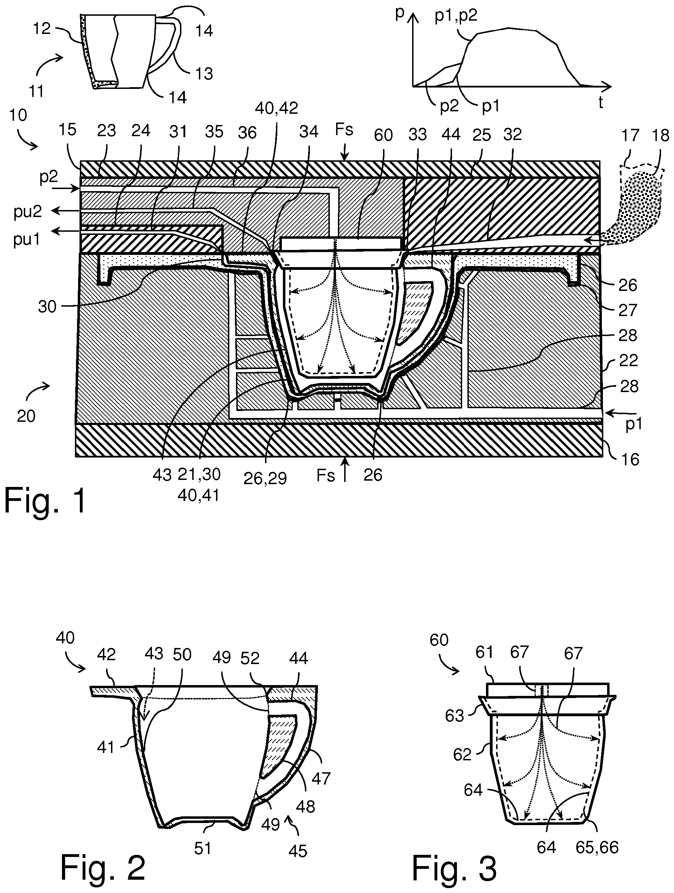

Wie aus Fig. 1 ersichtlich, dient eine beispielhaft dargestellte Behälterpressenanordnung 10 als eine Pressenanordnung zum isostatischen Pressen eines Pressteils, insbesondere tassenförmigen Behälters 11 bzw. Hohlkörpers. Der beispielhaft dargestellte Behälter 11 besteht aus einem eigentlichen Hohlkörper bzw. Becherabschnitt 12 und einem daran ansitzenden seitlichen Ansatz, insbesondere Henkel 13. Der beispielhafte Henkel 13 ist über einen oberen und einen unteren Ansatzansatz bzw. Henkelansatz 14 mit dem Becherabschnitt 12 verbunden. Die Behälterpressenanordnung 10 ist so aufgebaut, dass der Behälter 11 mit Becherabschnitt 12 und Henkel 13 in einem einzigen Pressvorgang aus einem pulver- und/oder granulatförmigen Pressgut pressbar ist.

Die Behälterpressenanordnung 10 weist eine insbesondere oberseitige Pressform-Aufnahmekomponente 15 und eine insbesondere unterseitige Pressform-Aufnahmekomponente 16 auf, zwischen denen eine eigentliche Pressform 20 einspannbar ist. Über einen Pressgutbehälter 17 ist pulver- und/oder granulatförmiges, insbesondere keramisches Pressgut 18 zu der Pressform 20 zuführbar.

Die Pressform 20 weist eine erste, insbesondere unterseitige Pressformkomponente 22 und eine zweite, insbesondere oberseitige Pressformkomponente 23 auf. Richtungsangaben wie oben oder unten dienen lediglich zu Veranschaulichungszwecken. Eigenständige Komponenten oder der insbesondere zweiten Pressformkomponente 23 zugeordnete Komponenten sind dargestellte Schließkomponenten 24, 25. Im geschlossenen Zustand sitzen auf der ersten Pressformkomponente 22 oberseitig mittig die zweite Pressformkomponente 23 und seitlich dazu die Schließkomponenten 24, 25 auf.

Die erste Pressformkomponente 22 weist einen Pressraum auf, in dessen Bereich sie eine Membran 26 trägt. Die Membran 26 ist insbesondere in seitlicher Richtung an der Oberseite der ersten Pressformkomponente 22 befestigt, wozu Membranbefestigungsmittel 27 in für sich bekannter Art und Weise einsetzbar sind.

Zum Pressen eines Behälters 11 wird vor dem Schließen der Behälterpressenanordnung 10 eine Außenform 40 in dem Formraum der ersten Pressformkomponente 22 eingesetzt. Die Außenform 40 ist in Fig. 1 und alleine in Fig. 2 mit zusätzlichen Bezugszeichen skizziert. Die Außenform 40 ist so dimensioniert, dass sie innerhalb ihres Körpers ein Pressen des Behälters 11 einschließlich des Behälterabschnitts 12 und des Henkels 13 ermöglicht.

Die Außenform 40 weist eine Becher-Membran 41 auf, welche aus einem elastischen Material ausgebildet ist und im eingesetzten Zustand mit ihrer Außenseite an der Membran 26 der ersten Pressformkomponente 22 anliegt. Ein auf die Membran 26 wirkender Pressdruck p1 verformt somit nicht nur die Membran 26, sondern zusätzlich auch die Becher-Membran 41 in innenseitiger Richtung.

Die Becher-Membran 41 ist vorzugsweise dünnwandig ausgebildet und hat im Wesentlichen die Form, welche zum Pressen des Becherabschnitts 12 erforderlich ist. Im Wesentlichen entspricht die Form der Becher-Membran 41 somit insbesondere einer Form des Becherabschnitts 12.

Oberseitig geht die Becher-Membran 41 in einen von der Becher-Membran 41 schräg, insbesondere quer nach außen verlaufenden Randabschnitt 42 über. Der Randabschnitt 42 erstreckt sich in seitlicher Richtung und dient zur Handhabung der Außenform 40 beim Entformen sowie zur Ausrichtung und Anordnung der Außenform 40 in der ersten Pressformkomponente 22 bzw. in der Membran 26 der ersten Pressformkomponente 22. Insbesondere zur Handhabung beim Entformen können aber auch andere Abschnitte der Außenform vorgesehen sein.

Zu einer Seite hin ist an der Außenform 40 ein Ansatz- bzw. insbesondere Henkelformabschnitt 45 ausgebildet, welcher sich in außenseitiger Richtung von der Becher-Membran 41 seitlich erstreckt. Der Henkelformabschnitt 45 ist so dimensioniert, dass er einen Formraum 44 zum Ausbilden eines Henkels 13 umschließt. Eine aus Sicht des Formraums 44 für den Henkel außenseitige Wandung des Henkelformabschnitts 45 ist als eine ansatzseitige bzw. henkelseitige Außenwand 47 vorzugsweise dünn ausgebildet. Die ansatz- bzw. henkelseitige Außenwand 47 liegt an einer entsprechend geformten Aufnahme in der ersten Pressformkomponente 22 bzw. in der der Membran 26 der ersten Pressformkomponente 22 an, wenn die Außenform 40 in der ersten Pressformkomponente 22 eingesetzt ist.

Die Außenform 40 weist somit einen innenseitigen Formraum 43 für den Hohlkörper bzw. Becherabschnitt auf, sowie zusätzlich im Henkelformabschnitt 45 einen Formraum 44 für den seitlichen Ansatz, insbesondere Henkel. Der Formraum für den Becherabschnitt 43 entspricht von der Kontur her einer Außenform des Becherabschnitts 12 eines zu pressenden Bechers. Der Formraum 44 für den Henkel entspricht von seinem Verlauf her dem zu pressenden Henkel 13 und mündet an mindestens einer Stelle, insbesondere an zwei Stellen, in den Formraum 43 für den Becherabschnitt, um bei Pressen einen Henkelansatz auszubilden. Die Kontur der beiden miteinander verbundenen Formräume 43, 44 ist dabei so dimensioniert, dass darin eingefülltes Granulat bei anliegendem Pressdruck zu der letztendlich gewünschten Behälterform gepresst wird.

Insbesondere im Fall eines zu pressenden Henkels mit zwei Henkelansätzen ist in dem Ansatzformabschnitt, insbesondere Henkelformabschnitt 45 zwischen einem Wandungsabschnitt der Becher-Membran 41 und dem Formraum 44 für den Henkel ein Henkeleinsatz ausgebildet oder eingesetzt.

Insbesondere im Fall eines eingesetzten solchen oder anderen Versteifungs- oder Henkeleinsatzes 48 ist die Außenform 40 im Wesentlichen einheitlich aus einem einzigen elastischen Material ausgebildet, während der Versteifungs- oder Henkeleinsatz 48 als darin eingesetzte Komponente bevorzugt aus einem weniger elastischen oder relativ zu einwirkenden Pressdrücken starren Material ausgebildet ist. Der beispielhafte Henkeleinsatz 48 bildet somit ein Widerlager für ein innenseitig an der Becher-Membran 41 anliegendes Pressgut und oberseitig, außenseitig und unterseitig als Widerlager für in dem Formraum 44 für den Henkel befindliches Pressgut, wenn darauf die Pressdrücke einwirken.

Bei einer bevorzugten Ausgestaltung erstreckt sich von einem Bodenabschnitt 51, welcher eine gewölbte Kontur aufweisen kann, seitlich aufwärts die Becher-Membran 41. Die Innenseite der Becher-Membran 41 und die Oberseite des Bodenabschnitts 51 dienen zum Ausbilden einer Außenseite eines Becherabschnitts 12 eines zu pressenden Behälters 11. Abgesehen von dem Henkelformabschnitt 45 sind diese bevorzugt dünnwandig aus elastischem Material ausgebildet. Im Bereich des Henkelformabschnitts 45 sind in dem innenseitigen Hohlkörperformabschnitt, insbesondere Becherformabschnitt 50 eine oder bevorzugt zwei Ansatzöffnungen, insbesondere Henkelansatzöffnungen 49 ausgebildet, über welche eine durchgehende Verbindung in den Formraum 44 für den Henkel führt. Außenseitig um den Formraum 44 für den Henkel ist der Henkelformabschnitt 45 vorzugsweise dünnwandig aus elastischem Material ausgebildet. Oberseitig geht der Bereich der Becher-Membran 41 in den Randabschnitt 42 über, wobei im Übergang zum Randabschnitt 42 ein abschnittsweise nach innen und dann wieder nach außen verlaufender oberer Randabschnitt 52 ausgebildet sein kann. Ein solcher oberer Randabschnitt 52 dient insbesondere vorteilhaft als Anlagefläche für eine Membran oder einen Körper einer im Pressbetrieb anliegenden Innenform und/oder Komponente der zweiten Pressformkomponente 23.

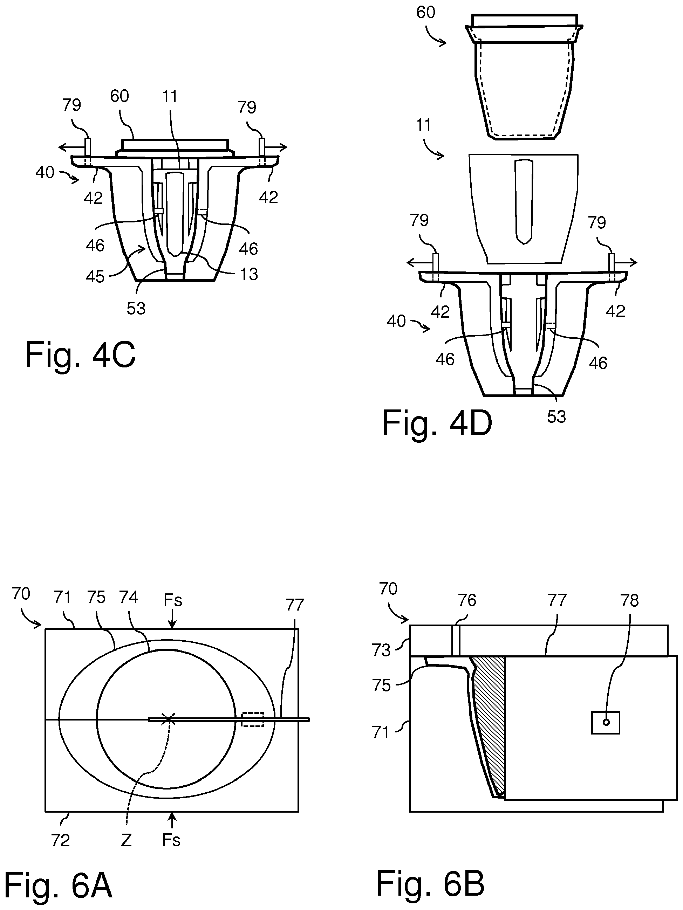

Wie insbesondere Fig. 4C und Fig. 4D entnehmbar ist, führt durch die Außenform 40 von einer Seite her ein Schlitz 53 in die Außenform 40 hinein. Der Schlitz 53 führt dabei vorzugsweise bis über einen Mittelpunkt Z vom Becherabschnitt der Außenform 40, wie in Fig. 6A skizziert ist. Dadurch ist die Außenform 40 in seitlicher Richtung aufbiegbar, um eine seitliche Druckentlastung eines geformten Becherabschnitts 12 vorzunehmen und den Behälter 11 aus der Außenform 40 entnehmen zu können. Bevorzugt verläuft der Schlitz 53 durch einen Bereich, in welchem der Henkel 13 zu formen ist. Mit anderen Worten verläuft der Schlitz 53 bevorzugt quer durch den Formraum 44 für den Henkel und die innenseitige Membran des innenseitigen Becherformabschnitts 50 sowie insbesondere auch durch zumindest einen Teil des Bodenabschnitts 51 hindurch.

Ein seitliches Auseinanderziehen mittels einer Entformungseinrichtung 79, welche beispielsweise stiftförmig in Öffnungen eingreift, welche insbesondere in dem Randabschnitt 42 der Außenform ausgebildet sind, legt somit den geformten Henkel 13 frei. Dabei wird auch der Henkeleinsatz 48 aus dem Bereich des Henkels seitlich wegbewegt, wobei der Henkeleinsatz 48 ebenfalls durch den Schlitz 53 geteilt ausgebildet sein kann.

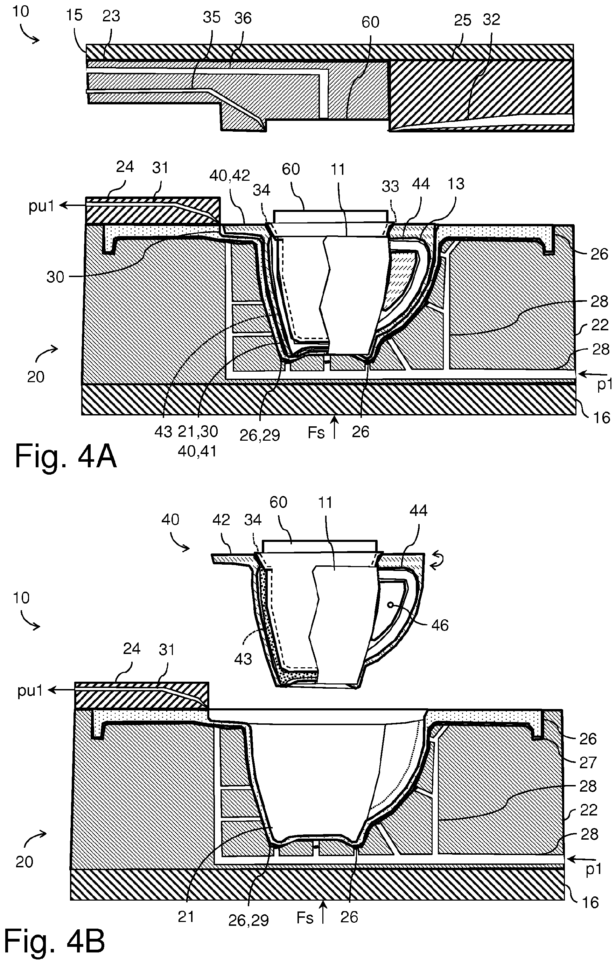

Nach einer Entnahme eines Bechers 11 und vor erneutem Einsetzen in die erste Pressformkomponente 22 wird die Außenform 40 optional mittels eines Formschlosses 46 verriegelt. Ein Formschloss 46 kann beispielsweise durch eine oder mehrere Steck- oder Rastverbindungen ausgebildet sein, welche im geschlossenen Zustand des Schlitzes 53 ineinander eingreifen (Fig. 4B - Fig. 4D).

Fig. 3 zeigt eine bevorzugte Innenform 60, welche als feste Komponente der zweiten Pressformkomponente 23 oder als separat einsetzbare Innenform 60 ausgebildet sein kann. Die Innenform 60 weist in ihrem unterseitigen Abschnitt eine Außenkontur auf, welche in der Außenform 40 eingesetzt in Verbindung mit der Innenseite der Außenform 40 zwischen diesen den Formraum 43 für den Becherabschnitt ausbildet.

Die Innenform 60 weist einen oberseitigen Befestigungsabschnitt 61 auf, über welchen die Innenform 60 an der zweiten Pressformkomponente 23 anlegbar oder daran befestigbar ist. Prinzipiell ist auch eine einzeilige Ausgestaltung mit dem restlichen Körper der zweiten Pressformkomponente 23 realisierbar. Unterseitig erstreckt sich von dem Befestigungsabschnitt 61 ein Körper, dessen äußere Umfangswand 62 die innenseitige Wandung des Formraums 43 ausbildet. Ein oberseitiger Randabschnitt 63, welcher von der Umfangswand 62 nach oben außenseitig verbreitert ausgebildet ist, dient als Gegenelement für den oberen Randabschnitt 52 der Außenform 40. Im zusammengesetzten Zustand bilden somit die Umfangswand 62 der Innenform 60 und die Becher-Membran 41 sowie der Bodenabschnitt 51 der Außenform 40 den Formraum 43 zum Formen eines Becherabschnitts aus.

Oberseitig dazu bilden der obere Randabschnitt 63 der Innenform 60 und der obere Randabschnitt 52 der Außenform 40 eine Füllöffnung 33 zum Befüllen der Formräume mit dem Pressgut 18 und außerhalb des Bereichs der Füllöffnung 33 eine Entlüftungsöffnung bzw. einen Entlüftungsspalt 34 zum Entlüften des Formraums aus.

Die Füllöffnung 33 ist über eine Füllleitung 32 an den Pressgutbehälter 17 angeschlossen. Insbesondere führt die Füllleitung 32 durch eine seitliche Schließkomponente 25 hindurch. Die Füllleitung 32 kann aber zum Beispiel auch durch einen einheitlichen Körper der zweiten Pressformkomponente 23 geführt sein. Zu der Entlüftungsöffnung 34 führt eine Druckleitung 35, welche insbesondere durch den Körper der zweiten Pressformkomponente 23 geführt ist und zum Anlegen eines Unterdrucks pu2 dient, um die Formräume 43, 44 beim Befüllen und Pressen zu entlüften.

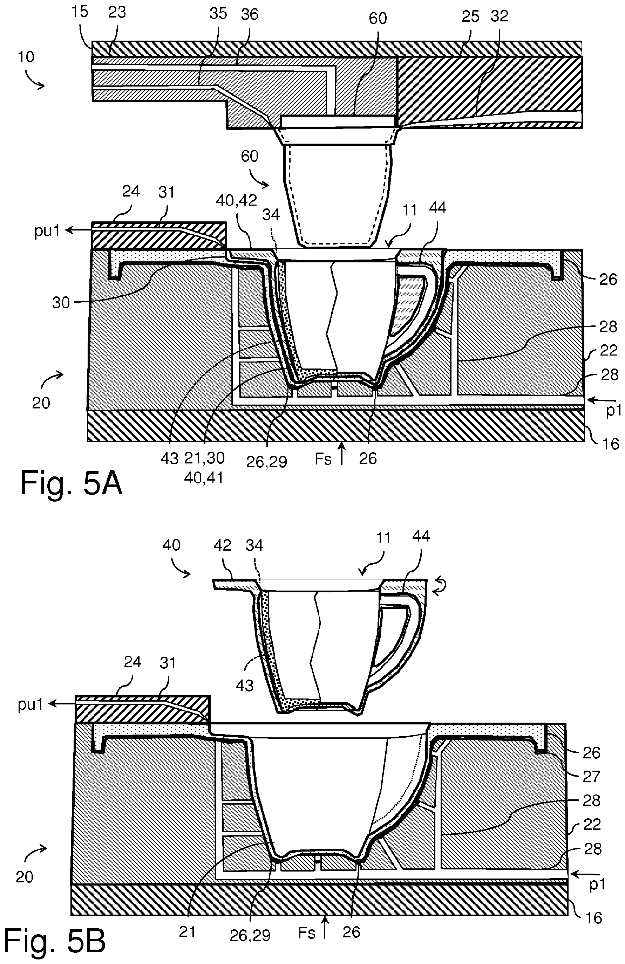

Eine weitere Druckleitung 36 führt durch die zweite Pressformkomponente 23 oder bevorzugt durch eine davon getrennt verstellbare Schließkomponente 24. Diese Druckleitung 36 endet in einem Übergangsbereich zwischen der Membran 26 der ersten Pressformkomponente 22 und der Außenform 40. In dem Übergangsbereich befindet sich eine Öffnung, insbesondere ein Aufnahmespalt 30 zwischen der Membran 26 und der Außenform 40 bzw. insbesondere deren außenseitiger Membran. Über die Druckleitung 36 ist ein Unterdruck pul anlegbar, welcher insbesondere verschieden zu dem Unterdruck pu2 zur Entlüftung sein kann. Der Unterdruck pul bewirkt einen Unterdruck zwischen der Membran 26 der ersten Pressformkomponente 22 und der Außenform 40, so dass die Außenform 40 an der ersten Pressformkomponente 22 angesaugt und daran bzw. in deren Formraum fixiert wird. Bei einem Abheben der zweiten Pressformkomponente 23 einschließlich gegebenenfalls der Schließkomponente 25 mit der Füllleitung 32 verbleibt somit die Außenform 40 in der ersten Pressformkomponente 22 fixiert, wie dies in Fig. 4A und Fig. 5A skizziert ist. Die zweite Schließkomponente 25 wird entweder unmittelbar vor einem Entnehmen der Außenform 40 abgehoben oder verbleibt in der Position an der ersten Pressformkomponente 22 auch während des Entnehmens der Außenform 40, wie dies in Fig. 4B, 5B skizziert ist. Optional kann die Schließkomponente 25 auch als Bestandteil der ersten Pressformkomponente ausgebildet sein. Auch kann optional die Druckleitung zum Ansaugen der Außenform 40 an der ersten Pressformkomponente 22 durch einen Bereich der ersten Pressformkomponente 22 und einen insbesondere oberen Abschnitt der Membran 26 geführt sein, wodurch auch die Schließkomponente 24 entfallen könnte.

Gemäß einer bevorzugten Ausgestaltung ist die Innenform 60 in dem Bereich zur Ausbildung des Formraums 43 für den Becherabschnitt nicht aus einem starren oder elastischen Vollkörper ausgebildet, sondern weist außenseitig eine Innenform-Membran 64 auf. Die Innenform-Membran 64 ist innenseitig mit einem Pressdruck p2 beaufschlagbar, welcher über Druckleitungen 36, 67 durch die zweite Pressformkomponente 23 und den Befestigungsabschnitt 61 der Innenform 60 zuführbar ist.

Optional kann die Innenform-Membran 64 als eine hohle Membran ausgebildet sein, in welcher innenseitig der Pressdruck P2 anliegt. Bevorzugt weist die Innenform 60 aber einen sich unterhalb der Innenform-Membran 64 erstreckenden Körper als Innenformkern 66 auf, zwischen dessen Außenumfang und der Innenseite der Innenform-Membran 64 ein Innenform-Membranspalt 65 ausgebildet ist, in welchen der Pressdruck p2 eingeleitet wird.

Zum Pressen eines Behälters 11 wird in die erste Pressformkomponente zuerst die Außenform 40 eingesetzt. Nachfolgend werden die weiteren Komponenten aufgesetzt, das heißt die Innenform 60, soweit vorhanden die Schließkomponenten 24, 25 und die zweite Pressformkomponente 23. Dabei kann die Innenform 60 an der zweiten Pressformkomponente 23 lösbar fixiert sein, um einen definierten Abstand zu dem Innenraum der Außenform zu halten, so dass der Formraum 43 mit ausreichender Größe ausgebildet wird. Bei separatem Einsetzen der Innenform 60 direkt in die Außenform 40 können auch die aneinander anliegenden oberen Randabschnitte 52, 63 so geformt und aneinander abgestützt sein, dass der Formraum 43 definiert ausgebildet ist und auch ausreichend große Füll- und Entlüftungsöffnungen 33, 34 verbleiben. Letztendlich werden die erste und die zweite Pressformkomponente 22, 23 mit den darin aufgenommenen Komponenten gegeneinander verspannt, was mit Hilfe der Pressform-Aufnahmekomponenten 15, 16 unter Anlegen außenseitiger Schließkräfte Fs erfolgen kann.

Nachfolgend wird Pressgut 18 über die Füllleitung 32 in den Formraum 43 für den Becherabschnitt eingefüllt, wobei über den Formraum 43 für den Becherabschnitt und die Henkelansatzöffnungen 49 das Pressgut auch in den Formraum 44 für den Henkel gelangt. Bei einem nachfolgenden Pressvorgang wird somit in einem einzigen Pressvorgang ein Behälter 11 einschließlich Becherabschnitt 12 und daran fest ausgebildetem Henkel 13 gepresst.

Rechts oberhalb zeigt Fig. 1 ein beispielhaftes Diagramm eines Verlaufs von Druck p über die Zeit t. Bevorzugt wird demnach für die Außenform 40 und die Innenform 60 ein jeweils individueller Pressdruck p1 bzw. p2 angelegt. Insbesondere wird bevorzugt zuerst ein Pressdruck p2 in die Innenform 60 eingeleitet, bevor ein Pressdruck p1 an die Membran 26 der ersten Pressformkomponente 22 und darüber auf die Membran, insbesondere Becher-Membran 41 und den Henkelformabschnitt 45, geleitet wird. Die Druckverläufe der Pressdrücke p1, p2 können während des gesamten Presszyklus zueinander verschieden sein, können aber auch insbesondere während einer Hauptpressphase gleichmäßig verlaufen oder gleich sein.

Nach dem Pressen wird die Pressform 20 geöffnet, indem (Fig. 4A) die zweite Pressformkomponenten 23 und gegebenenfalls alle oder ein Teil der Schließkomponenten 25 abgehoben werden. Dabei verbleibt die Innenform 60 in der Außenform 40 eingesetzt und zusammen mit der Außenform 40 in der ersten Pressformkomponente 22. In einem nachfolgenden Schritt wird die Außenform 40 zusammen mit der darin eingesetzten Innenform 60 und dem zwischen diesen geformten Behälter 11 aus der ersten Pressformkomponente 22 entnommen (Fig. 4B).

Zum Entformen des Behälters 11 wird die Außenform 40 längs des Schlitzes 53 geöffnet, wie Fig. 4C entnehmbar ist. Erst in einem nachfolgenden Schritt werden die Innenform 60 und nachfolgend der gepresste Behälter 11 aus der Außenform 40 nach oben hin entnommen.

Fig. 5A und 5B zeigen ein demgegenüber modifiziertes Verfahren zum Entformen. Bei der dargestellten Ausführungsvariante wird die Innenform 60 bereits zusammen mit der zweiten Pressformkomponente 23 nach oben abgehoben, wobei die Außenform 40 mit dem gepressten Behälter 11 in der ersten Pressformkomponente 22 verbleibt. Nachfolgend wird die Außenform 40 mit dem Behälter 11 aus der ersten Pressformkomponente entnommen, um letztendlich den Behälter 11 aus der Außenform 40 zu entnehmen.

Fig. 6A, 6B zeigen eine Außenform-Herstellungsform 70, welche insbesondere zum Herstellen der Außenform 40 mittels eines Spritzgießverfahrens ausgebildet ist. Zum Gießen wird dabei ein Material verwendet, mit welchem eine elastische Außenform herstellbar ist.

Die Außenform-Herstellungsform 70 weist insbesondere zwei Seitenteile 71, 72 auf, welche jeweils eine Hälfte der Becher-Membran 41 formen. Oberseitig und gegebenenfalls unterseitig sind weitere Seitenteile 73 anordbar, welche zum Ausbilden eines offenen Innenraums des zu formenden Becherabschnitts bzw. eines nach oben gewölbten Bodenabschnitts 51 der Außenform strukturiert sind. Insbesondere weist mindestens eines der Seitenteile 71 - 73 eine Gießöffnung 76 zum Hineingießen des Gießmaterials auf. Wie insbesondere Fig. 6B entnehmbar ist, ragt von dem oberen Seitenteil 73 ein Kernteil 74 in die beiden Seitenteile 71, 72 hinein, so dass zwischen Innenwänden der beiden Seitenteile 71, 72 und einem Außenumfang des Kernteils 74 ein Formraum 75 zum Ausbilden der Becher-Membran 41 und des Bodenabschnitts 51 entsteht.

Zum Ausbilden des Schlitzes 53 ist ein weiteres Formteil in der Außenform-Herstellungsform 70 eingesetzt, welches als ein Schlitzformteil 77 geformt ist. Das Schlitzformteil 77 führt von einer Seite her zwischen die beiden seitlichen Seitenteile 71, 72 in den Raum, in welchem der Schlitz 53 auszubilden ist. Das Schlitzformteil 77 erstreckt sich somit bevorzugt auch zumindest teilweise durch den Formraum 43 für den Becherabschnitt und insbesondere auch durch den Formraum 44 für den Henkel. Je weiter sich das Schlitzformteil 77 zwischen den beiden Seitenteilen 71, 72 erstreckt, desto weiter wird der Schlitz 53 bevorzugt auch im Bodenabschnitt 51 der Außenform ausgebildet. Vorzugsweise erstreckt sich das Schlitzformteil 77 bis über einen Mittelpunkt z des zu formenden Bodenabschnitts 51. Dies hat zur Folge, dass beim Pressen eines Behälters 11 mit einer solchen Außenform 40 ein entsprechend langer außenseitiger Grat an dem Becherabschnitt 12 entsteht, welcher zu verputzen ist. Daher wird bevorzugt, wenn das Schlitzformteil 77 bzw. der Schlitz 53 sich nicht zu weit in den Bereich des Becherabschnitts erstrecken. Eine Erstreckung sollte so weit sein, dass unter Berücksichtigung der Elastizität der Außenform 40 insbesondere ein ausreichendes Aufbiegen zur Entnahme eines gepressten Behälters aus einer solchen Außenform 40 ermöglicht wird.

Das Schlitzformteil 77 kann insbesondere Strukturformelemente 78 aufweisen, welche zum Ausbilden und/oder Einsetzen von einem Formschloss und/oder einem Henkeleinsatz 48 dienen.

Neben einer Außenform 40 mit einem in diese hineinführenden Schlitz 53 sind auch mehrteilige Außenformen realisierbar, beispielsweise um eine Schüssel mit mehreren außenseitigen Henkeln zu pressen. Auch können Außenformen mit mehreren in diese hineinführenden Schlitzen ausgebildet werden, um mehrere umfangsseitige Henkel separat entformen zu können, indem zwei oder mehr Schlitze zum Entformen aufbiegbar sind.

Eine bevorzugte Schlitzbreite liegt im Bereich von ca. 0,3 mm Schlitzbreite.

Neben Behältern 11 für Lebensmittel, Suppen oder Getränke können insbesondere auch technische keramische Produkte mit einer solchen Pressenanordnung gepresst werden. Ein Becherabschnitt dient dann ggfs. nicht zur Aufnahme von Lebensmitteln sondern zur Aufnahme anderer Komponenten, Materialien oder ist einfach nur hohl.

Während als konkretes Ausführungsbeispiel als Pressteil ein Becher mit Henkel beschrieben wurde, ist auch eine Herstellung sonstiger keramischer Güter umsetzbar. Dabei sind dann ggfs. vorstehende Begriffe durch äquivalente Begriffe zu ersetzen, wie Becher durch Hohlkörper und Henkel durch seitlicher Ansatz. Solche Pressteile sind insbesondere auch ganz ohne seitliche Ansätze bzw. Henkel formbar. Als Pressteile sind auch anders geformte, insbesondere stärker hintergriffige Pressteile formbar, wie z.B. Hohlwaren in Form bauchiger Tassen oder Suppenschüsseln. Ggfs. sind dann mehr Schlitze oder auch eine mehrteilige Außenform erforderlich.

Insbesondere können die verschiedenen Membranen der einzelnen Komponenten und Materialien von Außenform und Innenform zueinander verschieden sein und zueinander verschiedene Elastizitäten oder Starrheit aufweisen.

Soweit zum Befüllen Unterdruck zur Entlüftung beschrieben wird, kann gemäß anderer Ausgestaltungen auch ein Druckluftbefüllen mit oder ohne anliegendem Unterdruck eingesetzt werden.

### Bezugszeichenliste:

- 10: Pressenanordnung, insbesondere Behälterpressenanordnung
- 11: Pressteil, insbesondere Hohlkörper oder Behälter
- 12: Hohlkörper, insbesondere Becherabschnitt
- 13: seitlicher Ansatz, insbesondere Henkel
- 14: Ansatzansatz, insbesondere Henkelansatz
- 15: Pressform-Aufnahmekomponente
- 16: Pressform-Aufnahmekomponente
- 17: Pressgutbehälter
- 18: Pressgut
- 20: Pressform
- 21: Außenform-Aufnahmeraum
- 22: erste Pressformkomponente
- 23: zweite Pressformkomponente
- 24: Schließkomponente
- 25: Schließkomponente
- 26: Membran
- 27: Membranbefestigungsmittel
- 28: Druckleitung
- 29: Spalt zwischen Pressformkomponente und Membran
- 30: Aufnahmespalt zwischen Membran und Außenform
- 31: Druckleitung zum Aufnahmespalt
- 32: Füllleitung zum Formraum
- 33: Füllöffnung
- 34: Entlüftungsöffnung/spalt zum Formraum
- 35: Druckleitung zur Entlüftungsöffnung
- 36: Druckleitung zur Innenform oder Innenmembran
- 40: Außenform
- 41: Becher-Membran
- 42: Randabschnitt
- 43: Formraum für Hohlkörper, insbesondere Becher
- 44: Formraum für seitlichen Ansatz, insbesondere Henkel
- 45: Ansatzformabschnitt, insbesondere Henkelformabschnitt
- 46: Formschloss
- 47: ansatz- bzw. henkelseitige Außenwand
- 48: Versteifungs- oder Henkeleinsatz
- 49: Ansatzöffnung, insbesondere Henkelansatzöffnung
- 50: Hohlkörperformabschnitt, insbesondere Becherformabschnitt
- 51: Bodenabschnitt
- 52: oberer Randabschnitt
- 53: Schlitz
- 60: Innenform
- 61: Befestigungsabschnitt
- 62: Umfangswand, insbesondere innenseitige Membran
- 63: oberer Randabschnitt
- 64: Innenform-Membran
- 65: Innenform-Membranspalt
- 66: Innenformkern
- 67: Druckleitung
- 70: Außenform-Herstellungsform
- 71: Seitenteil
- 72: Seitenteil
- 73: oberes Seitenteil
- 74: Kernteil
- 75: Formraum
- 76: Gießöffnung
- 77: Schlitzformteil
- 78: Strukturformelement
- Fs: Schließkräfte
- p: Druck
- p1: Druck, insbesondere Pressdruck auf Außenform
- p2: Druck, insbesondere Pressdruck in Innenform
- pul: Druck, insbesondere Unterdruck zur Außenform
- pu2: Druck, insbesondere Unterdruck zur Entlüftungsöffnung
- t: Zeit
- Z: Mittelpunkt von Becherabschnitt der Außenform

## Patentansprüche

1. Pressenanordnung, zum Pressen eines Pressteils aus einem pulver- und/oder granulatförmigen keramischen Pressgut (18), wobei die Pressenanordnung aufweist
- eine erste Pressformkomponente (22), die eine rückseitig mit Pressdruck (p1) beaufschlagbare Membran (26) aufweist,
- eine zumindest abschnittsweise elastische Außenform (40), die in der ersten Pressformkomponente (22) einsetzbar oder eingesetzt ist,
**gekennzeichnet durch**
- eine zweite Pressformkomponente (23; 60), die als ein Gegenelement zum Ausbilden eines Formraums (43) zwischen einerseits sich oder einer an der zweiten Pressformkomponente (23) angeordneten Innenform (60) und andererseits einem innenseitigen Formabschnitt (50) der Außenform (40) anordbar ist.

2. Pressenanordnung nach einem vorstehenden Anspruch, welche eine Druckleitung (24) aufweist, die zum Anlegen eines Unterdrucks (pu1) zu einem Aufnahmespalt (30) zwischen der Membran (26) und der darin eingesetzten Außenform (40) führt.

3. Pressenanordnung nach einem vorstehenden Anspruch, bei der die Außenform (40) im eingesetzten Zustand zumindest teilweise an der Membran (26) anliegt, insbesondere ein/der Becherformabschnitt (50) und eine ansatz- oder henkelseitige Außenwand (47) der Außenform (40) außenseitig jeweils zumindest teilweise an der Membran (26) anliegen.

4. Pressenanordnung nach einem der Ansprüche 1 bis 3, **dadurch gekennzeichnet, dass**
die Außenform (40) mit hinterschnittfreier Außenkontur und mit einem innenseitigen Formabschnitt zum Ausbilden eines Pressteils mit hinterschnittiger Innenkontur ausgebildet ist.

5. Pressenanordnung nach einem der Ansprüche 1 bis 4, **dadurch gekennzeichnet, dass**
die Außenform (40) zum Ausbilden eines Pressteils, wobei das Pressteil einen zumindest einen seitlichen Ansatz aufweisenden Behälter (11) ausbildet, ausgebildet ist und wobei die Außenform (40) zumindest abschnittsweise aus einem elastischen Material ausgebildet ist und einen innenseitigen Formabschnitt - und zumindest einen davon ausgehenden Formraum (44) zum Ausbilden des seitlichen Ansatzes - aufweist.

6. Pressenanordnung nach Anspruch 4 oder 5, wobei die Außenform (40) einen Schlitz (53) aufweist, wobei der Schlitz (53) sich durch zumindest einen Teil eines Formabschnitts erstreckt, wobei der Schlitz (53) sich durch zumindest einen Teil eines Bodenabschnitts (51) und in einer Ebene schräg, durch einen Hohlkörper- oder Becherformabschnitt (50) erstreckt.

7. Pressenanordnung nach einem der Ansprüche 1 bis 6, **dadurch gekennzeichnet, dass**
die Innenform (60) eine elastische Umfangswand (62) aufweist, welche an einer Druckleitung (36) einer zweiten Pressformkomponente (23) anschließbar ist zum innenseitigen Anlegen eines Pressdrucks (p2) in der Innenform (60).

8. Pressenanordnung nach einem der Ansprüche 1 bis 6, **dadurch gekennzeichnet**, die Pressenanordnung eine Behälterpressenanordnung ist.

9. Verfahren zum Pressen eines Pressteils (11) aus einem pulver- und/oder granulatförmigen keramischen Pressgut (18), wobei
- eine zumindest abschnittsweise elastische Außenform (40) in einer unterseitig mit Pressdruck beaufschlagbaren Membran (26) einer ersten Pressformkomponente (22) eingesetzt wird,
- einerseits eine zweite Pressformkomponente (23) und/oder eine Innenform (60) und andererseits die erste Presseformkomponente mit der Außenform (40) aneinandergesetzt werden, wobei dazwischen ein Formraum (43) ausgebildet ist oder wird,
- der zumindest eine Formraum (43, 44) mit dem Pressgut (18) gefüllt wird und
- das Pressgut (18) durch Anlegen zumindest eines isostatischen Pressdrucks (p1, p2) zu dem Pressteil gepresst wird.

10. Verfahren nach Anspruch 9, bei dem ein gepresstes Pressteil, insbesondere Behälter (11), zusammen mit der geschlossenen gehaltenen Außenform (40) aus der ersten Pressformkomponente (22) entnommen wird.

11. Verfahren nach einem der Ansprüche 9 oder 10, bei dem während des Entnehmens aus der ersten Pressformkomponente (22) die/eine Innenform (60) noch im Formteil eingesetzt bleibt.

12. Verfahren nach einem der Ansprüche 9 bis 11, bei dem zum Entnehmen des gepressten Pressteils die Außenform (40) erst durch Aufweiten eines Schlitzes (53) geöffnet wird und nachfolgend das Pressteil aus der Außenform (40) entnommen wird.

13. Verfahren nach einem der Ansprüche 9 bis 12, bei dem zumindest während eines Teils eines Presszyklus ein an der Membran (26) oder der Außenform (40) anliegender Pressdruck (p1) zumindest zeitweilig mit unterschiedlichem Druck zu einem an einer Innenform (60) anliegenden Pressdruck (p2) an den zumindest einen Formraum (43, 44) angelegt wird.

14. Verfahren nach einem der Ansprüche 9 bis 13, bei dem an einem Aufnahmespalt (30) zwischen der Membran (26) der Pressformkomponente (22) und der darin eingesetzten Außenform (40) ein Unterdruck (pu1) angelegt wird.

15. Verfahren nach Anspruch 14, **dadurch gekennzeichnet, dass** der Unterdruck (pu1) über eine längere Zeitdauer angelegt wird als ein Unterdruck (pu2), der an einer Entlüftungsöffnung (34) des Formraums (43, 44) angelegt wird.

## Claims

1. Press assembly for pressing a pressed part from a powdery and/or granular ceramic material (18) to be pressed, wherein the press assembly comprises
- a first press molding component (22), which has a membrane (26) that can be subjected to pressing pressure (p1) on the rear side,
- an at least sectionally elastic outer mold (40) which can be inserted or is inserted in the first press molding component (22),
**characterized by**
- a second press molding component (23; 60), which can be arranged as a counter-element for forming a mold cavity (43) between, on the one hand, itself or an inner mold (60) arranged on the second press molding component (23) and, on the other hand, an inner-side mold section (50) of the outer mold (40).

2. Press assembly according to a preceding claim, comprising a pressure line (24) leading to a receiving gap (30) between the membrane (26) and the outer mold (40) inserted therein for applying a negative pressure (pu1).

3. Press assembly according to a preceding claim, in which the outer mold (40), in the inserted state, rests at least partially against the membrane (26), in particular a/the cup mold section (50) and an attachment-side or handle-side outer wall (47) of the outer mold (40) each rest at least partially against the membrane (26) on the outside.

4. Press assembly according to one of claims 1 to 3, **characterized in that** the outer mold (40) is formed with an undercut-free outer contour and with an inner-side mold section for forming a pressed part with an undercut inner contour.

5. Press assembly according to one of claims 1 to 4, **characterized in that** the outer mold (40) is designed for forming a pressed part, wherein the pressed part forms a container (11) having at least one lateral extension, and wherein the outer mold (40) is formed at least in sections from an elastic material and comprises an inner-side mold section and at least one mold cavity (44) extending therefrom for forming the lateral extension.

6. Press assembly according to claim 4 or 5, wherein the outer mold (40) comprises a slot (53), wherein the slot (53) extends through at least a portion of a mold section, wherein the slot (53) extends through at least a portion of a bottom section (51) and, obliquely in a plane, through a hollow-body or cup mold section (50).

7. Press assembly according to one of claims 1 to 6, **characterized in that** the inner mold (60) has an elastic circumferential wall (62) which can be connected to a pressure line (36) of a second press molding component (23) for the inner-side application of a pressing pressure (p2) in the inner mold (60).

8. Press assembly according to one of claims 1 to 6, **characterized in that** the press assembly is a container press assembly.

9. Method for pressing a pressed part (11) from a powdery and/or granular ceramic material (18) to be pressed, wherein
- an at least sectionally elastic outer mold (40) is inserted in a membrane (26) of a first press molding component (22), which can be subjected to pressing pressure on the underside,
- on the one hand a second press molding component (23) and/or an inner mold (60) and on the other hand the first press molding component are placed side by side with the outer mold (40), wherein a mold cavity (43) is or will be formed therebetween,
- the at least one mold cavity (43, 44) is filled with the material (18) to be pressed, and
- the material (18) to be pressed is pressed to the pressed part by applying at least one isostatic pressing pressure (p1, p2).

10. Method according to claim 9, wherein a pressed pressed part, in particular container (11), is removed from the first press molding component (22) together with the outer mold (40) which is held closed.

11. Method according to one of claims 9 or 10, in which, during removal from the first press molding component (22), the/an inner mold (60) remains inserted in the molded part.

12. Method according to one of claims 9 to 11, in which, in order to remove the pressed pressed part, the outer mold (40) is first opened by widening a slot (53) and the pressed part is subsequently removed from the outer mold (40).

13. Method according to one of claims 9 to 12, in which at least during a part of a pressing cycle, a pressing pressure (p1) applied to the membrane (26) or the outer mold (40) is applied to the at least one mold cavity (43, 44) at least temporarily with different pressure at a pressing pressure (p2) applied to an inner mold (60).

14. Method according to one of claims 9 to 13, in which a negative pressure (pu1) is applied to a receiving gap (30) between the membrane (26) of the press molding component (22) and the outer mold (40) inserted therein.

15. Method according to claim 14, **characterized in that** the negative pressure (pu1)is applied for a longer period of time than a negative pressure (pu2) which is applied to a vent opening (34) of the mold cavity (43, 44).

## Revendications

1. Agencement de presse, pour le pressage d'une pièce pressée à partir d'un produit céramique à presser (18) sous forme de poudre et/ou de granulés, l'agencement de presse présentant
- un premier composant de moulage par compression (22), qui présente une membrane (26) pouvant être soumise à une pression de compression (p1) sur sa face arrière,
- un moule extérieur (40) élastique au moins par sections, qui peut être inséré ou est inséré dans le premier composant de moulage par compression (22),
**caractérisé par**
- un deuxième composant de moulage par compression (23 ; 60) qui peut être disposé en tant que contre-élément pour former un espace de moulage (43) entre, d'une part, lui-même ou un moule intérieur (60) disposé sur le deuxième composant de moulage par compression (23) et, d'autre part, une section de moule (50) côté intérieur du moule extérieur (40).

2. Agencement de presse selon une revendication précédente, qui présente une conduite de pression (24) menant à un espace de réception (30) entre la membrane (26) et le moule extérieur (40) inséré dans celle-ci pour appliquer une dépression (pu1).

3. Agencement de presse selon une revendication précédente, dans lequel le moule extérieur (40) est au moins partiellement en contact avec la membrane (26) à l'état inséré, en particulier un/le tronçon de moule à godet (50) et une paroi extérieure (47) du moule extérieur (40) située du côté de l'embout ou de l'anse sont respectivement au moins partiellement en contact avec la membrane (26) côté extérieur.

4. Agencement de presse selon l'une des revendications 1 à 3, **caractérisé en ce que** le moule extérieur (40) est conçu avec un contour extérieur sans contre-dépouille et avec une section de moule côté intérieur pour former une pièce pressée avec un contour intérieur à contre-dépouille.

5. Agencement de presse selon l'une des revendications 1 à 4, **caractérisé en ce que** le moule extérieur (40) est conçu pour former une pièce pressée, la pièce pressée formant un récipient (11) présentant au moins un embout latéral, et le moule extérieur (40) étant conçu au moins par sections en un matériau élastique et présentant une section de moule côté intérieur - et au moins un espace de moule (44) partant de celle-ci pour former l'embout latéral.

6. Agencement de presse selon la revendication 4 ou 5, dans lequel le moule extérieur (40) présente une fente (53), la fente (53) s'étendant à travers au moins une partie d'une section de moule, la fente (53) s'étendant à travers au moins une partie d'une section de fond (51) et, dans un plan oblique, à travers une section de moule de corps creux ou de godet (50).

7. Agencement de presse selon l'une des revendications 1 à 6, **caractérisé en ce que** le moule intérieur (60) présente une paroi périphérique élastique (62) qui peut être raccordée à une conduite de pression (36) d'un deuxième composant de moulage par compression (23) pour appliquer une pression de compression (p2) côté intérieur dans le moule intérieur (60).

8. Agencement de presse selon l'une des revendications 1 à 6, **caractérisé en ce que** l'agencement de presse est un agencement de presse de récipients.

9. Procédé de pressage d'une pièce pressée (11) à partir d'un produit céramique à presser (18) sous forme de poudre et/ou de granulés, dans lequel
- un moule extérieur (40) élastique au moins par sections est inséré dans une membrane (26), pouvant être soumis à une pression de compression par le dessous, d'un premier composant de moulage par compression (22),
- d'une part, un deuxième composant de moulage par compression (23) et/ou un moule intérieur (60) et, d'autre part, le premier composant de moulage par compression avec le moule extérieur (40) sont placés l'un contre l'autre, un espace de moulage (43) étant ou sera formé entre eux,
- l'au moins un espace de moulage (43, 44) est rempli avec le produit à presser (18) et
- le produit à presser (18) est pressé pour former la pièce pressée par application d'au moins une pression de compression isostatique (p1, p2).

10. Procédé selon la revendication 9, dans lequel une pièce pressée, en particulier un récipient (11), est retirée du premier composant de moulage par compression (22) en même temps que le moule extérieur (40) maintenu fermé.

11. Procédé selon l'une des revendications 9 ou 10, dans lequel, pendant le retrait du premier composant de moulage par compression (22), le/un moule intérieur (60) reste encore dans la pièce moulée.

12. Procédé selon l'une des revendications 9 à 11, dans lequel, pour retirer la pièce pressée, on ouvre d'abord le moule extérieur (40) en élargissant une fente (53) et on retire ensuite la pièce pressée du moule extérieur (40).

13. Procédé selon l'une des revendications 9 à 12, dans lequel, au moins pendant une partie d'un cycle de pressage, une pression de compression (p1) appliquée à la membrane (26) ou au moule extérieur (40) est appliquée au moins temporairement à l'au moins un espace de moulage (43, 44) avec une pression différente d'une pression de compression (p2) appliquée à un moule intérieur (60).

14. Procédé selon l'une des revendications 9 à 13, dans lequel une dépression (pu1) est appliquée à une espace de réception (30) entre la membrane (26) du composant de moulage par compression (22) et le moule extérieur (40) inséré dans celle-ci.

15. Procédé selon la revendication 14, **caractérisé en ce que** la dépression (pu1) est appliquée pendant une période de temps plus longue qu'une dépression (pu2) appliquée à une ouverture d'aération (34) de l'espace de moulage (43, 44).
